(19) Europäisches Patentamt
European Patent Office
Office européen des brevets

(11) Publication number: 0 029 598
A1

# (12) EUROPEAN PATENT APPLICATION

(21) Application number: 80107272.9

(22) Date of filing: 21.11.80

(51) Int. Cl.³: C 09 D 3/81
C 09 D 3/80, C 08 L 33/06

(30) Priority: 21.11.79 US 96283
05.05.80 US 146265

(43) Date of publication of application:
03.06.81 Bulletin 81/22

(84) Designated Contracting States:
BE CH DE FR GB IT LI NL SE

(71) Applicant: E.I. DU PONT DE NEMOURS AND COMPANY
Legal Department 1007 Market Street
Wilmington, Delaware 19898(US)

(72) Inventor: Chang, David Chi-Kung
945 Stephenson Highway
Troy Michigan 48084(US)

(74) Representative: Abitz, Walter, Dr.-Ing. et al,
Abitz, Morf, Gritschneder P.O. Box 86 01 09
D-8000 München 86(DE)

## (54) An improved high solids coating composition of a low molecular weight acrylic polymer and a polyisocyanate cross-linking agent, and a substrate coated therewith.

(57) An improved high solids coating composition that contains at least 50% by weight of a binder of film-forming constituents in which the constituents are of

(A) an acrylic polymer that has a number average molecular weight of about 500-10,000, a hydroxyl content of at least 2% by weight and contains about 2-10% by weight of a chain transfer agent, and consists essentially of
an alkyl methacrylate,
a hydroxyalkyl acrylate, or a
hydroxyalkyl methacrylate; and
optionally, an alkyl acrylate
or styrene and

(B) an organic polyisocyanate cross-linking agent;

the improvement used with this composition is the addition of select ultraviolet light stabilizers and optionally, antioxidants. The composition is particularly useful for clear coat/color coat exterior finishes for automobiles, trucks and airplanes.

EP 0 029 598 A1

FF-7627-A

TITLE

An Improved High Solids Coating Composition Of A Low Molecular Weight Acrylic Polymer And A Polyisocyanate Cross-Linking Agent, And A Substrate Coated Therewith.

## BACKGROUND OF THE INVENTION

This invention is related to high solids coating compositions, in particular, to an improved high solids acrylic polyurethane coating compositions.

Acrylic polyurethane coating compositions are well known in the art as shown by Vasta U.S. Patent 3,558,564, issued January 26, 1971; Hick U.S. Patent 3,841,895, issued October 15, 1974 and Miller U.S. Patent 3,844,993, issued October 29, 1974. These patents illustrate high quality coating compositions. However, these compositions have a relatively high solvent content to provide for good application properties and good physical properties of the resulting finish. To utilize these compositions in areas which have strict air pollution relgulations, pollution abatement equipment is required. This equipment is expensive, increases capital investment and is costly to operate. Any attempt to reduce the solvent content of these compositions generally results in finishes which have either a poor appearance or unacceptable physical properties or both.

Also, it has been found that acrylic polyurethane coating compositions provide an excellent appearance along with depth of color and metallic glamour when a clear or transparent coat of the compositions is applied over a colored or pigmented coat. However, the weatherability

and durability of these clear coats have been found to be poor since checking, cracking and flaking of the clear coat occur after relatively short periods of exposure to outdoor weathering, giving the automobile or truck an unsightly appearance. Refinishing of these weathered clear coats is difficult and expensive since the clear coat must be sanded to remove cracked and flaked clear coat before a refinish coat can be applied.

There is great need for an acrylic polyurethane coating composition that has a low solvent content and can be utilized without pollution abatement equipment but still provides a high quality finish that is resistant to outdoor weathering and useful as an exterior finish for automobiles, trucks, and airplanes and as a clear coat/color coat finish. The high solids coating composition of this invention has these desirable characteristics.

## SUMMARY OF THE INVENTION

The improved high solids coating composition comprises at least 50% by weight of a binder of film-forming constituents and up to 50% by weight of a nonaqueous liquid carrier; the film-forming constituents consist essentially of

(A) about 50-95% by weight of an acrylic polymer having a number average molecular weight determined by gel permeation chromotography of about 500-10,000 and preferably 500-4,500, a hydroxyl content of about 2%-10% by weight, a glass transition temperature of about -20°C to +20°C and containing about 2-10% by weight of a chain transfer agent, wherein the acrylic polymer consists essentially of

an alkyl methacrylate that has 1-18 carbon atoms in the alkyl group,

a hydroxy alkyl acrylate, or a hydroxy alkyl methacrylate each having 2-4 carbon atoms in the alkyl group, and, optionally, an alkyl acrylate having 2-18 carbons in the alkyl group or styrene, and

(B) 5-50% by weight of an organic polyisocyanate cross-linking agent;

the improvement used therewith comprises the inclusion of about 1-20% by weight, based on the weight of the binder of the coating composition, of an ultraviolet light stabilizer; optionally, the coating composition contains about 1-20% by weight, based on the weight of the binder, of an ultraviolet light stabilizer and about 0.1-5% by weight, based on the weight of the binder, of an antioxidant.

DESCRIPTION OF THE INVENTION

The high solids coating composition has a binder content of film-forming constituents of at least 50% by weight. Generally, the composition has a binder content of about 60-85%. The remaining constituent in the composition is a liquid carrier which generally is a solvent for the binder. In addition, the composition optionally contains about 0.1-30% by weight, based on the weight of the binder, of pigment.

The improvement used with the high solids coating composition is the addition to the coating composition of about 1-20% by weight, based on the weight of the binder, of an ultraviolet light stabilizer. Optionally, the composition can contain about 1-20% by weight, based on the weight of the binder, of an ultraviolet light stabilizer and about 0.1-5% by weight, based on the weight of the binder,

of an antioxidant, preferably the weight ratio of ultraviolet light stabilizer to antioxidant is about 1:1 to about 50:1.

The binder of film-forming constituents used in the coating composition comprises about 50-95% by weight of an acrylic polymer and 5-50% by weight of an organic polyisocyanate cross-linking agent. For most uses, the composition contains about 65-75% by weight of the acrylic polymer and 25-35% by weight of the organic polyisocyanate cross-linking agent.

The acrylic polymer utilized in the coating composition is prepared by solution polymerization in which the monomers are blended with a solvent, polymerization catalyst and chain transfer agent and heated to about 75-150°C for 2-6 hours to form a polymer that has a number average molecular weight of about 500-10,000 and preferably about 500-4,500, a hydroxyl content of 2-10% by weight, and a glass transition temperature of about -20°C to +20°C. Generally, acrylic polymers having a number average molecular weight of about 1,000-3,500 are preferred and used in the composition. Generally, it has been found that to provide a coating composition with good application characteristics, acrylic polymers having a glass transition temperature that is lower than the glass transition temperatures of polymers used in conventional acrylic polyurethane enamels are used.

To form films that have acceptable physical properties from low molecular weight acrylic polymers, the polymers must have a hydroxyl content that is about two to three times higher than that of acrylic polymers used for conventional acrylic polyurethane compositions. The higher hydroxyl content provides additional cross-linking sites; the films formed have excellent

physical properties that are equivalent to and often better than those of films formed from conventional acrylic polyurethane compositions.

Both the above number average molecular weight and the weight average molecular weight (mentioned hereinafter) are determined by gel permeation chromatography.

The glass transition temperature of the polymer is determined by differential scanning colorimetry or is calculated.

One technique that is successfully used in preparing the low molecular weight acrylic polymers is a programmed addition of monomers, solvents, catalyst, solution, and chain transfer agent into a polymerization vessel at a given rate. These programmed additions can be manually calculated or calculated by a computer. This allows for the polymerization of low molecular weight acrylic polymers which are then terminated with the chain transfer agent at the desired low molecular weight.

Typical solvents which are used to prepare the acrylic polymer are the following: toluene, ethyl acetate, acetone, methyl isobutyl ketone, methylethyl ketone, ethyl alcohol, and other aliphatic, cycloaliphatic and aromatic hydrocarbon, esters, ethers, ketones and alcohols which are conventionally used.

About 0.1-4% by weight, based on the weight of the monomers, of the polymerization catalyst is used to prepare the acrylic polymer. Typical catalysts are: azobisisobutyronitrile, azobis-$\alpha,\gamma$-dimethylvaleronitrile, benzoyl peroxide, t-butyl pivalate and the like.

Typical chain transfer agents are 2-mercapto ethanol, dodecyl mercaptan, benzene thioethanol, mercapto. succinic acid, butyl mercaptan, mercapto propionic acid and the like. A sufficient amount of a transfer agent is used to provide the resulting acrylic polymer with about 2-10% by weight of a chain-transfer agent.

The acrylic polymer used in the high solids coating composition is of an alkyl methacrylate having 1-18 carbon atoms in the alkyl group, an alkyl acrylate having 2-18 carbon atoms in the alkyl group, and a hydroxyalkyl acrylate or a hydroxyalkyl methacrylate each having 2-4 carbon atoms in the alkyl group. To form an acrylic polymer which has a hydroxyl content of about 2-10% by weight, a sufficient amount of the aforementioned hydroxyalkyl acrylate or methacrylate is utilized. The polymer also can contain small amounts of α,β-ethylenically unsaturated carboxylic acid, such as acrylic acid, methacrylic acid, itaconic acid, in amounts of about 0.1-5% by weight.

Typical alkyl methacrylates and acrylates that can be used to prepared the acrylic polymer are: methyl methacrylate, ethyl methacrylate, butyl methacrylate, hexyl methacrylate, 2-ethylhexyl methacrylate, nonyl methacrylate, lauryl methacrylate, stearyl methacrylate, cyclohexyl methacrylate, isodecyl methacrylate, propyl methacrylate, phenyl methacrylate, isobornyl methacrylate, ethyl acrylate, propyl acrylate, isopropyl acrylate, butyl acrylate, isobutyl acrylate, hexyl acrylate, 2-ethylhexyl acrylate, nonyl acrylate, lauryl acrylate, stearyl acrylate, cyclohexyl acrylate, isodecyl acrylate, propyl acrylate, phenyl acrylate, isobornyl acrylate and the like.

Adhesion promoting monomers can also be used in the acrylic polymer such as diethyl aminoethyl methacrylate, t-butyl aminoethyl methacrylate, 3-(2-methacryloxyethyl)-2,2-spiro cyclohexyl oxazolidene and the like.

Typical hydroxyalkyl acrylates and methacrylates which can be used to prepare the acrylic polymer are: 2-hydroxyalkyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, and the like.

The acrylic polymer can contain about 0.1-30% by weight of other constituents such as styrene or substituted styrene, such as methyl styrene, acrylonitrile, methacrylonitrile, acrylamide and methacrylamide.

One useful acrylic polymer is of 15-82% by weight of an alkyl methacrylate that has 1-4 carbon atoms in the alkyl group, 2-50% by weight of an alkyl acrylate that has 2-12 carbon atoms in the alkyl group and 16-35% by weight of a hydroxyalkyl acrylate or a hydroxyalkyl methacrylate each having 2-4 carbon atoms in the alkyl group.

One particularly useful acrylic polymer of the aforementioned type is of about 60-80% by weight of methyl methacrylate, 2-10% by weight of 2-ethylhexyl acrylate, and 18-30% by weight of hydroxyethyl acrylate. An example of one useful acrylic polymer of the aforementioned type is of 71% by weight of methyl methacrylate, 4% by weight of 2-ethylhexyl acrylate, and 25% by weight of hydroxyethyl acrylate.

The following are examples of other useful acrylic polymer: 25-65% by weight of methyl methacrylate, 15-40% by weight of butyl acrylate, 20-35% by weight of hydroxyethyl acrylate; 50% by weight of

methyl methacrylate, 20% by weight of butyl acrylate and 30% by weight of hydroxyethyl acrylate; 35% by weight of methyl methacrylate, 35% by weight of butyl acrylate and 30% by weight of hydroxyethyl acrylate; 30% methyl methacrylate, 38% butyl acrylate and 32% hydroxyethyl acrylate; 6% methyl methacrylate, 64% ethylhexyl methacrylate, 30% hydroxyethyl acrylate; 36% methyl methacrylate, 34% lauryl methacrylate, 30% hydroxyethyl acrylate; and 10% methyl methacrylate, 60% butyl methacrylate and 30% hydroxyethyl acrylate.

One particularly useful polymer contains about 5-15% by weight styrene, 10-20% by weight methyl methacrylate, 33-43% by weight butyl acrylate, 27-37% by weight hydroxyethyl acrylate and 0.1-3% by weight of acrylic acid. One preferred acrylic polymer of the above type contains 15% styrene, 14.8% methyl methacrylate, 38% butyl acrylate, 32% hydroxyethyl acrylate and 0.2% acrylic acid.

Optionally, in addititon to the above film-forming constituents, about 1-10% by weight, based on the weight of the film-forming constituents of the composition, of cellulose acetate butyrate can be used in the composition. Cellulose acetate butyrate that has a butyryl content of about 25-60% by weight and a viscosity of about 0.01-2 seconds measured according to ASTM-D-1343-56 at 25°C. can be utilized.

Also, in addition to the above film-forming constituents, plasticizers in the amounts of 0.1-10% by weight, based on the weight of the film-forming constituents, can be used in the composition. Plasticizers that can be used are, for example, butyl benzyl phthalate, dibutyl phthalate, triphenyl phosphate, 2-ethylhexyl benzyl phthalate, dicyclohexyl phthalate, diallyl phthalate, dibenzyl phthalate,

butylcyclohexyl phthalate, mixed benzoic acid and fatty oil acid esters of pentaerythritol, poly(propylene adipate)dibenzoate, diethylene glycol dibenzoate, tetrabutylthiodisuccinate, butylphthalylbutyl glycolate, acetyltributyl citrate, dibenzyl sebacate, tricresyl phosphate, toluene ethyl sulfonamide, and dimethylene cyclohexyl phthalate.

The composition can contain in addition from about 0.5-15% by weight, based on the weight of the composition, of a polyhydroxy functional compound which is a solvent for the film-forming constituents, reduces the application viscosity of the composition, and will be cross-linked into a resulting finish prepared from the composition. Typical polyhydroxy functional compounds that are useful are trimethylol ethane, trimethylol propane trimethylol butane, trimethyl pentanediol, pentaerythritol, pentanediol, diethylene glycol, dipropylene glycol, triethylene glycol, 2-ethyl-1,3-hexanediol, tripropylene glycol, butanediol and the like. Low molecular weight hydroxyl-terminated polyesters can be used such as a polyester of trimethyl pentanediol and isophthalic acid, a polyester of trimethyl pentanediol and a mixture of dimethyl aliphatic carboxylates and the like.

The polyisocyanate used in the composition is preferably added to the coating composition and blended therewith a short time before the composition is used. The polyisocyanate can be added as a 100% solids liquid or can be added in a solution which can be of about 2-95% by weight of the polyisocyanate dissolved in a solvent or blend of solvents for the polyisocyanate that are compatible with the constituents of the coating composition. Any of the aforementioned solvents can be used.

Generally, aliphatic polyisocyanates and cycloaliphatic polyisocyanates are used in the composition. Typical examples are: ethylene diisocyanate, propylene-1, 2-diisocyanate, tetraethylene diisocyanate, hexamethylene diisocyanate, decamethylene diisocyanate, cyclohexylene-1,2-diisocyanate, methylene-bis(4-cyclohexy isocyanate), ethylene-bis-(4-cyclohexyl isocyanate), ethylene-bis-(4-dichlorohexyl isocyanate), propylene-bis-4(cyclohexyl isocyanate), isophronone diisocyanate and the like.

The preferred polyisocyanate used in the composition has a formula

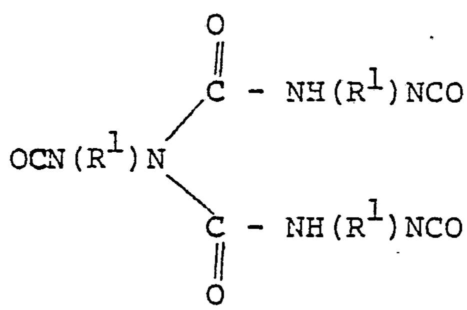

wherein $R^1$ is an alkyl group having 1-12 carbon atoms.

One preferred polyisocyanate is the biuret of hexamethylene diisocyanate that has the above structural formula in which $R^1$ is a straight chain hydrocarbon group having 6 carbon atoms. These biurets are prepared according to the process described in Mayer et al. U.S. Patent 3,245,941, issued April 12, 1966.

One useful composition contains as the film-forming binder about 60-70% by weight, based on the weight of the binder, of an acrylic polymer of 5-15% by weight styrene, 10-20% by weight methyl methacrylate, 33-43% by weight butyl acrylate, 27-38% by weight hydroxyethyl acrylate and 0.1-3%

by weight acrylic acid and 30-40% by weight, based on the weight of the binder, of the biuret of hexamethylene diisocyanate.

Also, about 0.1-2% by weight, based on the weight of the film-forming constituents of the composition, of an organometal catalyst can be used. Generally, an alkyl tin dilaurate catalyst such as dibutyl tin dilaurate is used.

As mentioned before, the composition can contain pigments. These pigments can be introduced into the composition by first forming a mill base of the acrylic polymer utilized in the composition with other compatible polymers by conventional techniques, such as sand-grinding, ball milling, attritor grinding, or two roll milling to disperse the pigments. The mill base is blended with the film-forming constituents as shown in the following Example.

Any of the conventional pigments used in coating compositions can be utilized in this composition. Examples of typical pigments that can be used are as follows: metallic oxide (such as titanium dioxide), zinc oxide, iron oxide and the like, metal hydroxide, metal flakes (such as aluminum flake), chromates (such as lead chromate), sulfides, sulfates, carbonates, carbon black, silica, talc, china clay, phthalocyanine blues and greens, organo reds, organo maroon and other organic dyes.

Typical ultraviolet light stabilizers that are useful in the coating compositions are as follows:

Benzophenones such as hydroxydodecycloxybenzophenone, 2,4-dihydroxybenzophenone, hydroxybenzophenones containing sulfonic acid groups, 2,4-dihydroxy-3',5'-di-*t*-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of dialkyl-4-hydroxyphenyltriazines, hydroxyphenyl-1,3,5-triazines and such triazines containing sulfonic acid groups, aryl-1,3,5-triazines, orthohydroxyaryl-*s*-triazine;

Benzoates such as dibenzoate of diphenylolpropane, *t*-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-*t*-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-β-(3,5-di-*t*-butyl-4-hydroxyphenyl)propionate, γ,γ'-bis(2-hydroxyphenyl)diisopropylbenzene, 3,5'-dibromo-2'-hydroxyacetophenone, ester derivatives of 4,4-bis(4'-hydroxyphenyl)pentanoic acid wherein there is at least one

unsubstituted position ortho to the aromatic hydroxyl groups, organophosphorus sulfides such as bis(diphenylphosphinothioyl)monosulfide and bis(diphenylphosphinothioyl)disulfide, 4-benzoyl-6-(dialkylhydroxybenzyl) resorcinol, bis(3-hydroxy-4-benzoylphenoxy)diphenylsilane, bis(3-hydroxy-4-benzoylphenoxy)dialkylsilane, 1,8-naphthalimides, $\gamma$-cyano-$\beta$,$\beta$-diphenylacrylic acid derivatives, bis(2-benzoxazolyl)alkanes, bis(2-napthoxazolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl- or alkyl-substituted acrylonitriles, 3-methyl-5-isopropylphenyl-6-hydroxycoumarone.

Particularly useful ultraviolet light stabilizers that can be used are hindered amines of bipiperidyl derivatives such as those disclosed in Murayama et al., U.S. Patent 4,061,616, issued December 6, 1977, column 2, line 65, through column 4, line 2, and nickel compounds such as [1-phenyl-3-methyl-4-decanoylpyrazolate (5)]-Ni, bis[phenyldithiocarbamato]-Ni(II), and others listed in the above patent, column 8, line 44 through line 55.

Typical antioxidants are as follows: tetrakisalkylene dialkylhydroxyaryl alkyl ester alkanes such as tetrakismethylene-3-(3',5'-dibutyl-4'-hydroxyphenyl) propionate methane, the reaction product of p-aminodiphenylamine and glycidyl methacrylate, the reaction product of *n*-hexyl-N'-phenyl-*p*-phenylene diamine and glycidyl methacrylate, pentaerythritol tetrakis(thioglycolate), trimethylolpropane tris(thioglycolate), trimethylolethane tris(thioglycolate), N-(4-anilinophenyl)acrylamide, N-(4-anilinophenol)maleamic acid, N-(4-anilinophenyl)maleimide, alkylhydroxyphenyl groups bonded through carboalkoxy linkages to the nitrogen atom of a heterocyclic nucleus containing an imidocarbonyl


BAD ORIGINAL

group or an imidodithiocarbonyl group, 3,5-di-t-butyl-4-hydroxycinnamonitrile, ethyl-3,5-di-t-hexyl-4-hydroxycinnamate, substituted benzyl esters of β-substituted hydroxyphenylpropionic acids, bis(hydroxyphenylalkylene) alkyl isocyanurate compounds, tetrakishydroxybenzylphosphonium halides alone or in combination with a dialkylthiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphorothionates or phosphinothionates, diphenylbis(3,5-di-t-butyl-4-hydroxyphenoxy)silane, hydrocarbylhydroxyphenyldihydrocarbyldithiocarbamates such as 3,5-di-t-butyl-4-hydroxyphenyldimethyldithiocarbamate and aminobenzylthioether.

One preferred combination of ultraviolet light stabilizer and antioxidant is 2-hydroxy-4-dodecyloxybenzophenone or a substituted 2(2'-hydroxyphenyl)benzotriazole and tetrakismethylene-3(3',5'-dibutyl-4'-hydroxyphenyl)propionate methane.

The coating composition of this invention can be applied over a variety of substrates, such as metal, wood, glass, plastics, and the like, by any of the conventional application methods, such as spraying, electrostatic spraying, dipping, brushing, flow-coating and the like. The viscosity of the composition can be adjusted for any of these methods by adding solvents if necessary. Generally, the composition is utilized at a high solids content which keeps air pollution at a minimum level.

The coatings are baked at relatively low temperatures of about 65-140°C. for about 15 minutes-2 hours. The resulting coating is about 0.1-5 mils thick, but, for most uses, a 1-3 mil thick coating is

used. One technique that is used to insure that there will be no popping or cratering of the coating is to allow the solvents to flash off for about 15-30 seconds and longer before a second coating is sprayed on or otherwise applied, then waiting for about 2-10 minutes before baking the coating to allow any residual solvents to flash off. Optionally, the coating can be baked for a short period at a low temperature before a second coating is applied. The resulting coatings have good gloss and can be rubbed or polished with conventional techniques to improve the smoothness or appearance or gloss or both. The coating has good adhesion to substrates of all types, is hard and resistant to weathering, solvents, alkali, scratches and the like. These characteristics make the composition particularly useful as a finish for automobiles, trucks, airplanes, railroad equipment and for the repair of trucks and automobiles. The composition can also be used on appliances, vending machines, outdoor equipment such as bridges, water tanks, gas tanks and the like.

When the coating composition is used as a clear coat/color coat finish for substrates in which the color coat contains an ultraviolet light stabilizer, it is believed that ultraviolet light stabilizer migrates from the color coat into the clear coat and provides ultraviolet light stabilizer to the clear coat for protection against weathering. Preferably, both the clear coat and the color coat contain ultraviolet light stabilizer and as stabilizer is lost from the clear coat due to weathering, it is replenished from the color coat. The color coat provides a reservoir for the ultraviolet light stabilizer for the clear coat and maintains the

stabilizer and antioxidant (when used) at an effective level that provides protection from weathering. Applicant does not wish to be held to the above theory.

Preferred, to form a durable finish, about 5-8% by weight of the ultraviolet light stabilizer is used along with about 0.1-1% by weight of the antioxidant and the ratio of ultraviolet light stabilizer to antioxidant is about 10:1.

In a color coat/clear coat finish the thickness of the fully cured color coat and clear coat can vary. Generally, the color coat is about 0.4-1.5 mils thick and preferably 0.6-1.0 mils thick and the clear coat is about 0.5-6.0 mils thick and preferably 0.8-1.5 mils thick.

The color coat contains pigment in a pigment-to-binder weight ratio of about 1/100 to about 150/100. Any of the aforementioned conventional pigments used in coating compositions including metallic flake pigments can be used.

The clear coat can also contain transparent pigments, i.e., pigments having the same or similar refractive index as the binder of the clear coat and a small particle size of about 0.015-50 microns. Typical pigments that can be used in a pigment to binder weight ratio of about 1/100 to 10/100 are inorganic siliceous pigments, such as silica pigments. These pigments have a refractive index of about 1.4-1.6.

The clear coat/color coat finish can be applied to all types of substrates such as primed or unprimed metal, plastic, rubber, flexible ethylenepropylene copolymer rubbers, flexible polyurethanes, fiberglass reinforced with polyester resins and the like by conventional spraying techniques. Preferably the clear coat is applied to the color coat while the color coat is still wet. Other conventional

application techniques as mentioned above can also be used. Under some circumstances it may be desirable to apply the clear coat in the form of a powder and upon baking coalesce the powder into a clear coat/color coat finish.

Two particularly useful additives for both the color coat and the clear coat are iron pyrophosphate and finely divided silica. Up to about 10% by weight and generally about 0.1-10% by weight based on the weight of the binder, of iron pyrophosphate can be used. Up to about 15% by weight, and generally about 0.5-15% by weight, based on the weight of the binder, of finely divided silica can be used. Iron pyrophosphate and the silica improve overall durability and performance of the finish of this invention.

In particular, iron pyrophosphate is a useful additive which provides a synergistic effect of the ultraviolet light stabilizer and antioxidant. Compositions containing the above three constituents have a surprisingly longer period of outdoor weatherability before failure occurs. The longer period is more than the cumulative effect that would be expected of the combination of the three constituents.

The following examples illustrate the invention. All parts and percentages are on a weight basis unless other wise specified.

EXAMPLE 1

The following constituents are blended together to form a paint A (control):

| Portion 1 | Parts By Weight |
| --- | --- |
| Acrylic resin solution (85% solids of methyl methacrylate, n-butyl acrylate, 2-hydroxy ethyl acrylate in a weight ratio of 50/20/30 having a weight average molecular weight of 3000, a glass transition temperature of 291°K and a hydroxyl No. of 136 in methyl ethyl ketone) | 162.36 |
| Blue mill base (469.3 parts of the above acrylic resin solution, 13.14 parts of a polymeric dispersant, 79.98 "Monastral" Blue pigment, 37.68 parts ethylene glycol monobutyl ether acetate) | 15.12 |
| Red mill base (471.12 parts of the above acrylic resin solution, 10.98 parts of a polymeric dispersant, 79.98 parts of "Monastral Red Pigment, 37.92 parts of ethylene monobutyl ether acetate) | 8.70 |
| Aluminum flake mill base (115.38 parts of the above acrylic resin solution, 68.50 parts of aluminum flake paste of 35% solids in organic solvent) | 414.12 |
| White mill base (1334.8 parts of the above acrylic resin solution, 123 parts of a polymeric dispersant, 1542.2 parts of ethylene glycol monobutyl ether acetate, 6000 parts of titanium dioxide pigment) | 2.64 |
| Black mill base (225.96 parts of the above acrylic resin solution, 16.41 parts of a polymeric dispersant, 39.99 parts of carbon black pigment, 37.64 parts of ethylene glycol monobutyl ether acetate) | 6.96 |
| Dibutyl tin dilaurate | 24.00 |
| Ethylene glycol monobutyl ether acetate | 107.22 |
| Portion 2 | |
| "Desmodur" N100 (a biuret of hexamethylene diisocyanate) | 224.40 |

| | |
|---|---|
| Ethyl acetate | 134.26 |
| Total | 1100.28 |

Portion 1 is thoroughly mixed and then portion 2 is added and mixed with portion 1.

A clear coat is prepared as follows:

| Portion 1 | Parts By Weight |
|---|---|
| Acrylic resin solution (described above) | 517.30 |
| Silicone resin solution | 0.42 |
| Dibutyl tin dilaurate | 28.00 |
| Ethylene glycol monoethyl ether acetate | 78.54 |
| Ethylene glycol monobutyl ether acetate | 112.77 |
| **Portion 2** | |
| "Desmodur" N100 solution (described above) | 261.80 |
| Ethyl acetate | 78.61 |
| Total | 1077.44 |

Portion 1 is thoroughly mixed and then portion 2 is added and mixed to form a clear coating composition.

Paint B is prepared by blending the following constituents:

| | Parts By Weight |
|---|---|
| Paint A (prepared above) | 183.38 |
| Ultraviolet light stabilizer solution 1 [20% solution of 2(2'-hydroxyphenyl) benzotriazole in methyl ethyl ketone] | 5.00 |
| Ultraviolet light stabilizer solution 2 [20% solution of 4-(2,2,6,6-tetramethyl piperidyl)-sebacate] in methyl ethyl ketone) | 5.00 |
| Antioxidant solution [20% solution of tetrakis methylene 3(3',5'-dibutyl-4'-hydroxy phenyl) propionate methane] | 0.50 |
| Total | 193.88 |

A clear coat C is prepared by blending the following constituents:

| | Parts By Weight |
|---|---|
| Clear coat(prepared above) | 166.74 |
| Ultraviolet light stabilizer solution 1(described above) | 5.00 |
| Ultraviolet light stabilizer solution 2(described above) | 5.00 |
| Antioxidant solution(described above) | 0.50 |
| Total | 177.24 |

The above prepared Paint A is sprayed onto three separate sets of four phosphatized steel panels per set and allowed to air dry for 15 minutes and then baked for 10 minutes at 65°C. to form a coating about 1.1 mils thick. The above clear coat is then applied to each of the above painted panels and air dried for 15 minutes, then baked for 10 minutes at 65°C to form a clear coat about 0.8-1.0 mils thick.

The above prepared Paint B is sprayed onto six separate sets of four phosphatized steel panels per set and dried and baked as above. The above clear coat is then applied to three sets and clear coat C is applied to the other three sets and dried and baked as above giving about the same thickness as above.

One set of each of the above panels is exposed to 6 months weathering in Florida. Another set of the above panels is exposed to accelerated weathering in a weathering device, and a third set of the above panels is exposed to a Q.U.V. "Weather-O-Meter".

Both sets of panels that contained ultraviolet light stabilizer and antioxidant in the color coat (Paint B) exhibited substantially less

loss of gloss of the finish in comparison to the panels of Paint A under actual and accelerated weathering conditions.

1. An improved high solids coating composition comprising at least 50% by weight of a binder of film-forming constituents and up to 50% by weight of a liquid carrier; in which the film-forming constituents consist essentially of

(A) about 50-95% by weight of an acrylic polymer having a number average molecular weight determined by gel permeation chromotography of about 500-10,000, and consisting essentially of

up to 30% by weight of styrene, methyl methacrylate, an alkyl methacrylate or an alkyl acrylate each having 2-12 carbon atoms in the alkyl group and a hydroxy alkyl acrylate or a hydroxy alkyl methacrylate each having 2-4 carbon atoms in the alkyl group; and

(B) about 5-50% by weight of an organic polyisocyanate cross-linking agent, the improvements uses therewith comprises:

about 0.1-20% by weight, based on the weight of the binder, of an ultraviolet light stabilizer.

2. The coating composition of claim 1 in which the acrylic polymer has a hydroxyl content of about 2-10% by weight, a glass transition temperature of about -20°C to +20°C and contains about 2-10% by weight of a chain transfer agent.

3. The coating composition of claim 2 in which the acrylic polymer consists essentially of

15-82% by weight of methyl methacrylate,

2-50% by weight of an alkyl acrylate having 2-12 carbon

atoms in the alkyl group, and
16-35% by weight of a hydroxy alkyl acrylate or a hydroxy alkyl methacrylate, each having 2-4 carbon atoms in the alkyl group.

4. The coating composition of claim 2 in which the acrylic polymer consists essentially of
5-15% by weight of styrene,
10-20% by weight of methyl methacrylate,
33-43% by weight of butyl acrylate,
27-37% by weight of hydroxyl ethyl acrylate and
0.1-3% by weight of acrylic acid.

5. The coating composition of any one of claims 1 to 4 containing pigment in addition to the binder in the amount of about 0.1-30% by weight, based on the weight of the binder.

6. A composition according to any one of claims 1 to 5 which contains up to about 10% by weight, based on the weight of film-forming constituents, of iron pyrophosphate and up to about 15% by weight of finely-divided silica.

7. The coating composition of any one of claims 1 to 6 containing 1-20% by weight, based on the weight of the binder, of an ultraviolet light stabilizer and about 0.1-5% by weight, based on the weight of the binder, of an antioxidant, preferably an alkylene (dialkyl hydroxylaryl)ester alkane; wherein the weight ratio of ultraviolet light stabilizer to antioxidant is 1:1 to about 50:1.

8. The coating composition of any one of claims 1 to 7 in which the crosslinking agent is of the formula

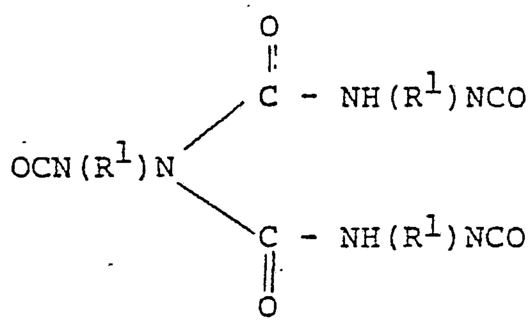

wherein $R^1$ is an alkyl group having 1-12 carbon atoms, preferably the biuret of hexamethylene diisocyanate.

9. The coating composition of any one of claims 1 to 8 in which the ultraviolet light stabilizer is a benzophenone or a substituted benzotriazole stabilizer.

10. The coating composition of any one of claims 1 to 9 containing in addition to the film-forming constituents 0.1-2% by weight of a catalyst, preferably dibutyl tin dilaurate.

11. The coating composition of claim 2 in which the acrylic polymer consists essentially of methyl methacrylate, butyl acrylate, hydroxy ethyl acrylate in a 50/20/30 weight ratio and the organic polyisocynate is the biuret of hexamethylene diisocyanate.

12. The coating composition of claim 7 in which the ultraviolet light stabilizer is a 2(2'-hydroxyphenyl) benzotriazole or 4-(2,2,6,6-tetramethyl piperidyl) sebacate or mixtures thereof and the antioxidant is tetrakismethylene-3-(3',5'-dibutyl-4'-hydroxyphenyl) propionate methane.

13. A substrate having a finish of a clear coat top layer in firm adherence to a color coat layer in adherence with the substrate; wherein

the clear coat consists essentially of a transparent film-forming binder;

the color coat consists essentially of a film-forming binder of the coating composition of claim 1 containing pigments in a pigment-to-binder weight ratio of about 1/100 to 150/100.

14. The substrate of claim 13 in which the color coat is about 0.4-1.5 mils thick and the clear coat is about 0.5-5.0 mils thick, and in which preferably both the color coat and the clear coat each contain an ultraviolet light stabilizer.

15. The substrate of claim 13 in which the clear coat is a dried coalesced layer of the composition of claim 7 and the color coat is a dried coalesced layer of the composition of claim 7 containing pigment in addition to the binder of about 0.1-30% by weight, based on the weight of the binder of the color coat.

0029598

European Patent Office

# EUROPEAN SEARCH REPORT

Application number
EP 80 10 7272

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | FR - A - 1 551 585 (LAVORAZIONE MATERIE PLASTICE)<br>* abstract *<br>-- | 1-15 | C 09 D 3/81<br>3/80<br>C 08 L 33/06 |
| | US - A - 3 522 207 (D.H.A. HAYER et al.)<br>* claims *<br>-- | 1-15 | |
| | FR - A - 1 429 032 (AMERICAN CYANAMID)<br>* abstract *<br>------- | 1-15 | |

TECHNICAL FIELDS SEARCHED (Int. Cl.3)

C 09 D 3/81
3/80
C 08 L 33/06
33/00
33/02
33/04
33/08
33/10
33/12
33/14
C 09 D 5/32
C 08 K 5/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 25-02-1981 | FOUQUIER |

EPO Form 1503.1 06.78